# EUROPEAN PATENT APPLICATION

(11) **EP 1 653 319 A1**
(43) Date of publication of application: **03.05.2006**
(21) Application number: 05112859.3
(22) Date of filing: 19.11.2001
(51) Int. Cl.: G06F 1/00

(54) **A method for providing contents for a wireless communication device**

(30) Priority: 21.11.2000 FI 20002554
(62) Divisional of application: 01983630.3
(71) Applicant: Nokia Corporation, 02150 Espoo (FI)
(72) Inventor: Kivipuro, Risto, 37120, Nokia (FI); Jokinen, Jukka, 33250, Tampere (FI); Nikupaavola, Arto, 33560, Tampere (FI)
(74) Representative: Pursiainen, Timo Pekka

(57) **Abstract**

The invention relates to a method for providing contents in a wireless communication device (5a, 5b, 5c) which is equipped with at least means for utilizing the contents. In the method, at least one content component (21a-21f) is formed of the contents. Said at least one content component (21a-21f) is supplemented with at least one data structure (44), in which is defined information related to the content component (21a-21f). Furthermore in the method, at least one content packet (20) is formed, which is supplemented with said at least one content component (21a-21f) and with at least one data structure (44) related to said at least one content component (21a-21f). Said content packet (20) is stored, and said content packet (20) is loaded in the wireless communication device (5a, 5b, 5c).

## Description

The present invention relates to a method for preventing a copying of contents and to a method for loading a content packet. The invention also relates to content packet server, a device, and a wireless communication device.

As wireless communication devices are becoming more versatile and their functions are increasing, it has become possible to perform also other functions, such as calendar applications, notepad applications, etc., in wireless communication devices. It has also become possible to set up a connection for example to the Internet data network, and so-called WAP phones can be used to implement functions similar to browsing in the Internet data network and other functions performed with a data processor. Also, the display properties of wireless communication devices have been developed to the effect of data processors, wherein displays of wireless communication devices can be used to display various information also in graphic form. The resolutions of displays have been increased, and some wireless communication devices even apply a colour display. Furthermore, operating systems, such as the EPOC, have been developed for wireless communication devices. Thus, thanks to such an operating system as well as sophisticated programming languages, an open application development environment is possible, whereby it is easier than before to provide applications for wireless communication devices. For example due to the above-mentioned factors, the need for providing various contents for wireless communication devices is significantly increasing.

In wireless communication devices of prior art, the format of information to be displayed on the display is primarily determined already at the stage of manufacturing of the wireless communication device, wherein the data needed for presenting visual information is stored in the memory means of the wireless communication device. Thus, the user has hardly any chance of changing these visual properties. However, it has already been possible to download ringing tones from a mobile communication network or possibly also from the Internet data network, either by means of a wireless communication device or by using a data processor coupled to the intemet data network and transferring the ringing tone information from this data processor to the wireless communication device. Wireless communication devices are also known, in which the user can compose the preferred ringing tone by himlherself. Moreover, the applications to be used in connection with a wireless communication device are primarily stored in the memory means of the wireless communication device already at the manufacturing stage. Thus, the provider of the application must have the required means for changing the application for each different type of wireless communication device, wherein the application provider and/or the manufacturer of the wireless communication device must have a large variety of different versions of the same application. It is expensive and difficult to maintain such a system, and further, the probability of possible application errors increases with the number of versions.

Furthermore, it is known that an operator logo can be received in a wireless communication device and displayed on the display of the wireless communication device. On the Internet home pages of some operators, it is possible to design private logos to be downloaded to a wireless communication device, or, from a list on said pages, it is possible to select a logo to be loaded to a wireless communication device. Such a logo is downloaded by means of smart short messages (S-SMS, Smart Short Message Service). The user selects the logo to be loaded and, if necessary, enters the mobile phone number of the wireless terminal, to which the logo is to be downloaded. After this, the server of the operator starts to transmit information needed for displaying the logo in one or more text messages via the mobile communication network to the wireless communication device. In one prior art solution, smart text messages are also used in the transmission of ringing tones.

From data processors, it is known to download various themes, such as themes of the Windows® operating system (Window® Themes) e.g. from the Internet data network. Such a theme primarily contains audiovisual information, such as information on the background of the display device (Desktop Bitmap), information required for displaying system icons ("My Computer"; "Network Neighbourhood"; "Recycle Bin"), visual information on the cursor to be displayed on the display device, and audio information. The system icons refer to the system applications supplied with the operating system. Thus, an indicator device can be used to start a system application corresponding to such a system icon. A theme is normally downloaded to a data processor in such a way that the user starts a web browser application and contacts the terminal server of the Internet service provider e.g. by means of a modem. After this, the user uses the browser application to search for the desired theme and starts to download the information required for using it by means of the Internet data network to the user's data processor. Such theme information is normally in compressed format, wherein the theme is formed into one packed file which is decompressed in the user's data processor into different theme files. For decompressing, the compressed file is supplemented with information on e.g. the compressing method and possibly also the compressing program and its version. To decompress a packed file usually requires that the user's data processor comprises an application which is compatible with the compressing method in question and is capable of decompressing, whereby the packed file can be decompressed. In some cases, a packed theme file is arranged as a running application, wherein the decompression is started by starting this application. It is thus a so-called self-extracting application. After the decompression, the user has, in the memory means of the data processor, a set of files containing the above-mentioned audiovisual information. The installation and use of the theme also requires that a configuration file is set up, which describes the content of the theme. One disadvantage of such a theme packet is that the user has hardly any chance of affecting the contents of this theme packet before downloading. Furthermore, after the theme packet has been decompressed in the data processor, it cannot be changed very easily. Single files of theme packets can also be downloaded. However, their installation requires either a program packet suitable for installing themes, or the user must edit the configuration file him/herself. Nevertheless, this is difficult and requires special knowledge of the user. Moreover, the themes do not support content provision, verification of components contained in the theme, their validation, testing, adaptation for different types of devices, or launching, for conventional data processors, even less for wireless communication devices. It is also difficult to utilize components contained in the theme in the creation of new themes. Yet another drawback to be mentioned in this context is that obtaining updates for the downloaded theme requires activity from the user and e.g. visiting the home page of the provider of the theme in question, to find out if updates are available for the theme in question. Furthermore, the provider of the theme does not easily find out the data processors in which themes have been downloaded. It is also very easy to copy such themes, because it is difficult to arrange copy protection in them in a case where the themes are arranged to be downloaded by means of the Internet data network or the like. Thus, it is also difficult to arrange payment for themes subject to a charge. It is not easy to utilize components contained in a certain theme when new themes are formed. Moreover, the themes do not particularly support content provision, testing, adaptation for different types of devices, and content publishing.

Computers very commonly apply a certain operating system, wherein e.g. the provider of applications can assume that an application made for this specific operating system will function in a majority of computers. Thus, the provider of the application does not need to design a large number of different application versions. On the other hand, it is normally possible in computers to change the operating system, wherein the user can select the operating system used in the computer. On the other hand, wireless communication devices do not have this possibility of installing and replacing the operating system. Furthermore, wireless communication devices normally apply an operating system which is specific to the manufacturer and even to the type. There are also differences in the user interfaces of wireless communication devices according to the manufacturer and the type. Thus, it is laborious to design different contents, such as applications, for each device type. In solutions of prior art, the user does not have many chances of affecting e.g. the user interface of the wireless communication device either.

In most commonly used personal computers, the keyboard is a standard-type QWERTY keyboard, whereas the keypads of wireless communication devices vary to a great extent according to the manufacturer and the type. The situation is similar also with respect to displays. Computers normally apply only some display alternatives, in which the differences lie primarily in the resolution. In wireless communication devices, the displays can differ from each other significantly: in some models, a display is used in which only one text line can be displayed at a time, whereas some wireless communication devices have a display on which it is possible to display several text lines and also graphic information. Thus, if necessary, the information to be displayed must be scaled on the basis of the type of the display used in the wireless communication device. For example, a background image can be easily displayed on a display with a high resolution, but editing may be required to display the same background image on a display with a lower resolution. Some wireless communication devices apply a colour display, whereas a monochrome display is used in most wireless communication devices of prior art. On a monochrome display, it should be possible to display colour information by means of grey tones, which may require changes in the contents and/or applications. Yet some wireless communication devices may comprise so-called soft keys, or such soft key function fields are determined on the display.

In some cases, the applications are installed from a diskette, a CD-ROM, a digital versatile disc, or a corresponding storage means. Thus, the information contained in the storage means can be copy protected, which can be used to prevent or at least reduce the production of pirate copies. However, this arrangement has e.g. the drawback that the user may want to use the same application in several data processors, wherein the user should acquire a separate application for each data processor. Furthermore, it may be difficult to use diskettes or corresponding storage means in connection with wireless communication devices, and it is time-consuming to acquire applications, because the user must e.g. order or acquire the required storage means from a retail dealer before the application can be used in the wireless communication device. Furthermore, it may be possible that the user has different terminals, such as e.g. a desktop computer, a laptop computer, a palmtop computer, which may all have the same operating system, such as the above-mentioned Windows®, but different hardware properties, such as display resolution and size, the audio properties of the devices may differ significantly, etc. Thus, the installation of a theme e.g. in a laptop computer does not necessarily have equally high quality as if the same theme were installed in an efficient desktop computer.

It is an aim of the present invention to provide a method for preventing a copying of contents for a wireless communication device, a content packet server, a device, as well as a wireless communication device. It is also an aim of the invention to achieve a content provision system whereby different contents can be copy protected to prevent unauthorized access to the contents. The invention is based on the idea that contents are formed as content components, of which one or more content packets are formed for a wireless communication device, containing copy protection information that is integrally related to the content components. Such a content packet is transferred to a distribution system, from which the content packet can be downloaded to a wireless communication device. Preferably in connection with the distribution system, such as at the production stage of the content packet, the content packet is converted to comply with various wireless communication devices, wherein the content packet is supplemented with system information relating e.g. to the properties of the wireless communication devices. Thus, at the loading stage, the distribution server selects, for each content component specific to the communication device version, such a content component of the content packet which best corresponds to the version of the wireless communication device, in which the content packet is loaded. After the content packet has been loaded in the wireless communication device, the content components contained in the content packet are installed in the wireless communication device. When the content packet is activated in the wireless communication device, the properties of the wireless communication device are changed to correspond to the activated content packet.

According to a first aspect of the present invention there is provided a method for preventing an unauthorized use of contents for a wireless communication device, which wireless communications device is provided with identification information, the method comprising:
forming at least one content component from the content;
supplementing said at least one content component with at least one data structure;
defining information associated with the content component into the data structure;
forming at least one content packet;
supplementing said at least one content packet with said at least one content component with which said at least one data structure is supplemented; and
defining authentication information on the content packet.

According to a second aspect of the present invention there is provided a method for loading a content packet, which is provided with authentication information, to a wireless communication device, which is provided with identification information, the method comprising:
selecting a content packet for loading;
comparing the authentication information of the content packet with the identification information of the wireless communication device, and
loading the content packet to the wireless communication device, if the comparison indicates that the authentication information of the content packet matches with the identification information of the wireless communication device.

According to a third aspect of the present invention there is provided a method for preventing an unauthorized use of contents for a wireless communication device, which wireless communications device is provided with identification information, the method comprising:
forming at least one content component from the content;
supplementing said at least one content component with at least one data structure;
defining information associated with the content component into the data structure;
forming at least one content packet;
supplementing said at least one content packet with said at least one content component with which said at least one data structure is supplemented; and
defining authentication information on the content packet.
selecting a content packet for loading;
comparing the authentication information of the content packet with the identification information of the wireless communication device, and
loading the content packet to the wireless communication device, if the comparison indicates that the authentication information of the content packet matches with the identification information of the wireless communication device.

According to a fourth aspect of the present invention there is provided a content packet server comprising:
means for forming at least one content component of contents for a wireless communication device;
means for supplementing said at least one content component with at least one data structure,
means for defining information associated with the content component into the data structure;
means for forming at least one content packet;
means for supplementing said content packet with said at least one content component with which said at least one data structure is supplemented;
means for defining authentication information on the content packet.

According to a fifth aspect of the present invention there is provided a content packet server comprising:
means for receiving a content packet provided with authentication information and comprising at least one content component of contents for a wireless communication device, said at least one content component supplemented with at least one data structure, and said data structure comprising information associated with the content component;
means for defining authentication information on the content packet; and
means for loading said content packet into the wireless communication device.

According to a sixth aspect of the present invention there is provided a device comprising:
means for receiving a content packet provided with authentication information and comprising at least one content component of contents, said at least one content component supplemented with at least one data structure, and said data structure comprising information associated with the content component;
means for comparing the authentication information of the content packet with the identification information of the wireless communication device, and
means for utilizing the content packet by the wireless communication device, if the comparison indicates that the authentication information of the content packet matches with the identification information of the wireless communication device.

According to a seventh aspect of the present invention there is provided a wireless communication device comprising:
means for receiving a content packet provided with authentication information and comprising at least one content component of contents, said at least one content component supplemented with at least one data structure, and said data structure comprising information associated with the content component;
means for comparing the authentication information of the content packet with the identification information of the wireless communication device, and
means for utilizing the content packet by the wireless communication device, if the comparison indicates that the authentication information of the content packet matches with the identification information of the wireless communication device.

With respect to the present invention, content refers e.g. to applications (application software) and other objects which are used in connection with a wireless communication device and which can be loaded in and possibly also deleted from the wireless communication device. These objects can be such that can be used to change various audiovisual properties, such as ringing tones, background images, etc. Also various game applications, files, documents, calendar data, video clips, images, digital business cards, *etc*., can be part of contents in view of this invention. Furthermore, the contents may comprise various links and shortcuts to databases, Internet pages, or the like.

Considerable advantages are achieved by the present invention when compared with solutions of prior art. When applying the method of the invention, various content packets which consist of one or more content components and can be edited by the final user, if necessary, can be easily loaded in the wireless communication device. Moreover, the production of content packets is easier by applying the method of the invention than in the system of prior art. Thus, the production of content packets can be focused on the actual content information, and the adaptation of the content packets for various device environments can be implemented separately from the production of the content packets and the content components. Thus, also the error probability is reduced in the production of content packets and content components. When applying the method of the invention, debiting for downloading and/or using the contents can be arranged in a flexible way, wherein also the content provider can better make sure that a remittance is duly received for the contents provided and subject to a charge. Further, the contents can be provided with various encryptions and copy protections, wherein the production of pirate copies can be prevented or significantly hindered. Also, when applying the method of the invention, the user can download the preferred content in his/her various wireless communication devices without the need to acquire a separate content packet for each device, wherein it is also less expensive to use the content. It is relatively easy to download content packets according to the invention, and even after downloading the packets, it is possible to arrange the acquisition of new updates when applying the method of the invention. In the method of the invention, it is also possible to find out afterwards the wireless communication devices in which each content packet has been downloaded and in which it is used. Thus, the content provider can obtain information e.g. on the degree of utilization and popularity of the different contents provided, and direct advertising and inform the user of new content packets and changes in content packets. The content components produced by the method of the invention are separate objects containing a description of the content component in question as well as the data required by the system. Thus, the content components can be used in several different content packets, and a content component already produced can be utilized in the production of new content components. By means of this arrangement, possible copy protections, debiting data and other data specific to the content component are also included in the new content component as well as in such a new content packet to which the content component is added.

The user of the wireless communication device can edit the properties of the wireless communication device by means of such content packets. Furthermore, various settings can be defined for the wireless communication device, for different use situations. For example, the user can define a content packet for business hours and a content packet for leisure time. By selecting a suitable content packet for each use situation, the user can set the wireless communication device to correspond to various use situations, e.g. according to various activities. The user can also design preferred content packets by the method of the invention and store them in a memory space formed for the user in the system, if necessary, and/or in the memory means of his/her wireless communication device. The user can thus also edit, browse and load content packets and content components designed by him/herself. The invention also makes it possible for the user to transmit the content packets designed by him/herself to the system to be downloaded, wherein also other users, and/or users defined for a specific group, can utilize content packets designed by other users. Also the pricing of content packets designed by users and the charging for downloaded content packets is made possible by the arrangement of this invention. Furthermore, the invention makes it possible that the user can be acquainted with the contents of the content packet before making a decision on downloading. Another advantage of the present invention that should be mentioned in this context is that the user does not always need to download a full content packet but only a part of it, wherein this partial downloading can be taken into account e.g. in the pricing. Even if the user bought the whole packet, the downloading can still be performed either partially or completely.

In the following, the invention will be described in more detail with reference to the appended drawings, in which
- Fig. 1: shows a system according to a preferred embodiment of the invention in a reduced chart,
- Fig. 2: shows various example situations, in which different content packets are downloaded in a wireless communication device,
- Fig. 3: shows a wireless communication device according to a preferred embodiment of the invention in a reduced block chart,
- Fig. 4: shows an example of a data structure used for describing a content packet,
- Fig. 5: shows, in a reduced view, the content packet according to a preferred embodiment of the invention,
- Fig. 6: shows, in a reduced chart, a system for distributing content packets according to a preferred embodiment of the invention, and
- Fig. 7: shows an example of a data structure used for describing a content component.

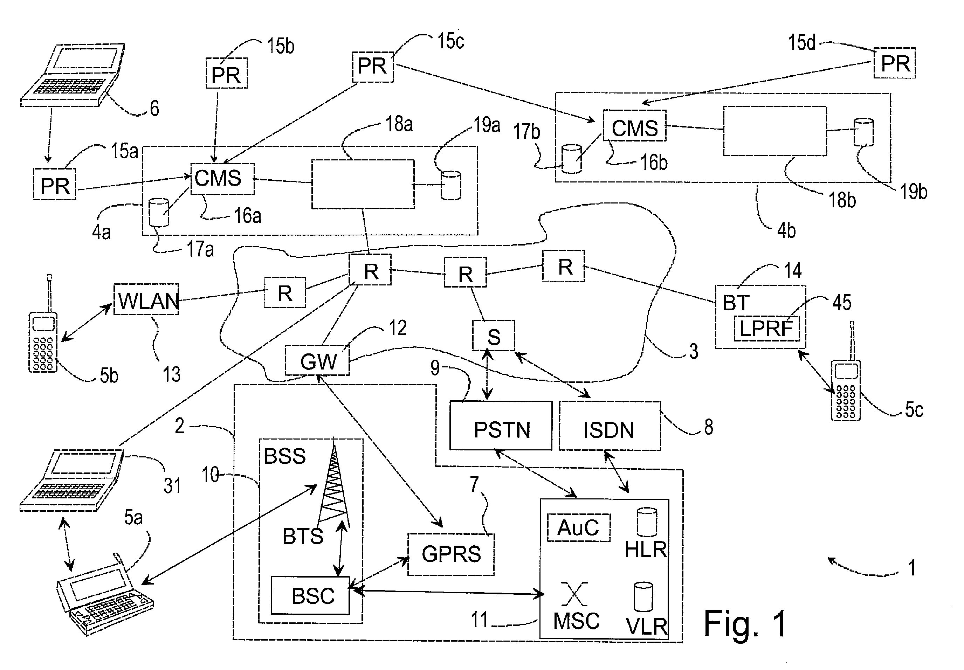

In the following, the invention will be described with reference to the communication system 1 according to a preferred embodiment of the invention, shown in Fig. 1. The communication system 1 preferably comprises at least one wireless communication network 2, such as a mobile communication network, Internet data network 3, or the like, content packet distribution systems 4a, 4b, wireless communication devices 5a, 5b, 5c, as well as content packet production means 6. The Internet data network 3 preferably comprises at least routers R and terminal servers S, which is known as such. Furthermore, in the communication network 1 of Fig. 1, a data transmission connection can be set up between the mobile communication network 2 and the Internet data network 3, for example via a packet network 7 (General Packet Radio Service, GPRS), an integrated services digital network 8 (ISDN) and/or a public switched telephone network 9 (PSTN). The mobile communication network 2 preferably comprises base station subsystems 10 (BSS) and at least one mobile services switching centre 11 (MSC). From the packet network 7, a data transmission connection is set up to the Internet data network 3 preferably via a gateway support node 12. The wireless communication devices 5a, 5b, 5c used can be e.g. a so-called communicator type wireless communication devices or other communication devices provided with means for using various contents in addition to the mobile station functions. An example of such a known communicator type device is Nokia 9110 Communicator. It is obvious that the communication system according to the preferred embodiment of the invention shown in Fig. 1 is only a reduced example, but in practical applications, the structure of the communication system 1 can differ even significantly from the example of Fig. 1. The Internet data network, for example, comprises a large number of routers, nodes and terminal servers. Furthermore, the communication system 1 can comprise a wireless local area network 13 (WLAN). From the wireless local area network 13, a data transmission connection is set up to the Internet data network for example via a router. The wireless local area network can also be a part of the Internet data network. It is also possible to couple a wireless communication device to such a local area network, as is illustrated by the second wireless communication device 5b in the example of Fig. 1.

In the example of Fig. 1, a third wireless communication device 5c is arranged to communicate with the Internet data network 3 via wireless local communication means. In this case, the Internet data network is equipped with a terminal server 14 which comprises wireless local communication means, such as radio communication means 45 based on the Bluetooth technique (low-power radio frequency, LPRF), and/or infrared communication means (Infrared Data Association, IrDA). Thus, a variety of data transmission techniques can be applied in downloading of content packets with the wireless communication device 5c.

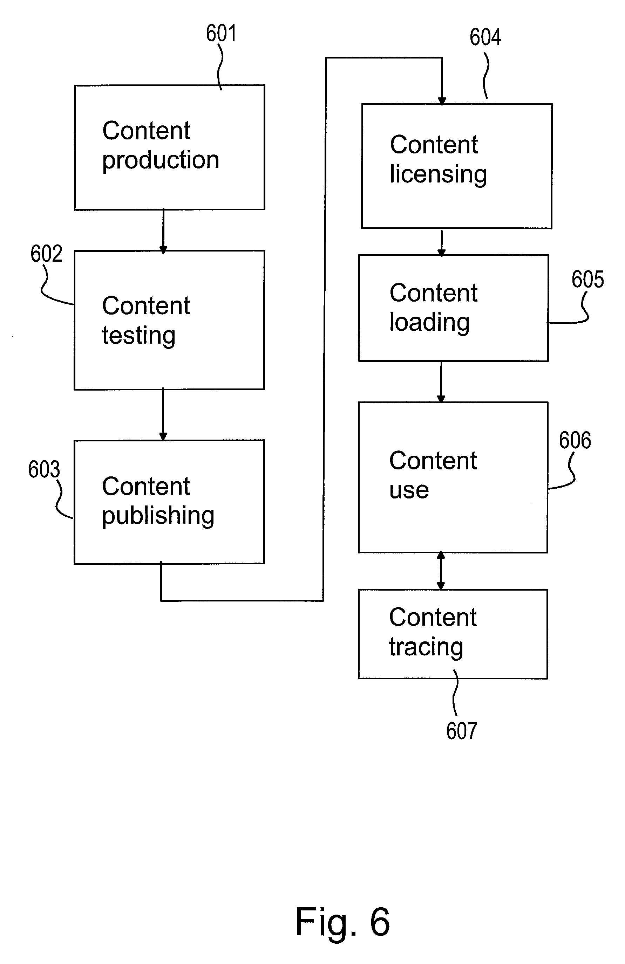

Figure 6 shows, in a reduced chart, a content packet distribution system complying with a preferred embodiment of the invention. In the production of content packets (block 601 in the chart of Fig. 6), content providers 15a-15d can use their data processors 6 to form and compile the desired content components in each content packet. These content packets may contain e.g. audiovisual information, applications, links to various addresses, etc. The content packet provider 15a-15 can provide various content components by means of application software in the data processor, such as a text processing program, a drawing program, programs intended for designing various applications, *etc*. These content components are preferably stored in a file format in such a way that each content component consists of one or more files. The content component can be further supplemented with information describing the properties of the content component, which can be utilized upon composing and/or decomposing a content packet. After this, the desired content components are compiled with a compilation program to form a content packet. At this compilation step (block 602), a data structure is preferably formed to contain information about the content components in the content packet, the types of the content components, information related to charging, information related to copy protection, *etc*. Furthermore, at the compilation stage, the data of each content component in the data structure can be supplemented with information about the content packet provider, for example address data, such as the uniform resource locator (URL), to the home page of the content packet provider and possibly even directly to the storage location of the component in question. Furthermore, the provider of the content packet can produce various versions of hardware-specific content components, for different communication device versions. The different content components of the content packet, the data structures of the content components, as well as said data structure of the content packet are transmitted to a content packet loading server 18a, 18b, in which they are preferably stored in a content packet database 19a, 19b.

At the stage of loading the content packet, the content packet is compiled by the content packet loading server 18a, 18b to preferably one file which thus contains the data structure as well as the information required for each content component in the content packet. Furthermore, this file may contain information required for decomposing the content packet. Before compressing, it is possible to edit, if necessary, the information which describes the properties of the content components and is added for each content component separately or jointly for the whole packet upon compressing. Furthermore, each content component of the content packet can be compressed separately before compiling the content packet, and/or the whole content packet can be compressed, wherein the storage and transfer of the content packet requires less capacity than if the content packet were stored and transmitted in uncompressed format. This compressing can be performed by using methods known as such, wherein its description in more detail will not be necessary in this context. Yet, the content packet can be formed in such a file format which can be run in the wireless communication device of the final user, wherein the content packet is automatically decompressed into the memory means of the wireless communication device and is then ready for use.

After the content packet provider 15a-15d has compiled the content packet and performed compressings that are possibly required, the content packet provider transmits the content packet to a content packet control server 16a, 16b. The content packet control server 16a, 16b comprises a database 17a, 17b, in which is stored at least the data structure required for compiling the content packets and the content components in the content packets. After this, the content packet control server 16a, 16b can perform necessary testings on the content packet before the content packet is loaded to be distributed in the system, for example via content packet loading servers 18a, 18b. For this purpose, the content packet control server 16a, 16b preferably comprises a testing environment which substantially corresponds to a functional system, wherein the content packet can be subjected to necessary tests which correspond to real use conditions as well as possible, and whereby possible errors can be detected in the content packet in order to prevent loading of possibly incorrect content packets. The tests can be related, for example, to factors related to launching of the content packets, such as testing of versions produced on different types of devices, production and testing of a user interface, classification, pricing, etc. Furthermore, tests can be made in relation to the use of a launched content packet, such as searching with various search keys and/or classifications, browsing/preview, purchasing, loading partially/fully, copy protection of content components and/or the whole content packet, installing and use of the content packet in a wireless communication device, function of the content packet in different types of wireless communication devices, *etc*. For such testing, a simulator can be designed, whose functions substantially correspond to the properties of a wireless communication device, at least for the parts in which testing of the content packets is performed. Such a simulator is implemented e.g. by programming in the application software of the content packet control server 16a, 16b. The aim can also be to detect possible viruses in the content packets at this stage. After the content packet has been found suitable for distribution, the content components of the content packet are classified and adapted for different wireless communication devices 5a, 5b, 5c. Further, at this stage, possible pricing data, payment data and other corresponding data can be defined and added to the content packet, if it has not been already done by the provider of the content packet. This stage of launching the content packet is represented by block 603 in the chart of Fig. 6.

If necessary, a part of the content packets or the content components, or the whole content of the content packet or component, can be copy protected to prevent pirate copying. This copy protection can be preferably made either by the devices 6 of the content provider or in the content packet control system before transferring the content packet to the content packet loading server 18a, 18b for distribution. Thus, the final user must be provided with an encryption key or the like, needed for deciphering the copy protection. The copy protection can also be performed in such a way that the protection is first made at the stage of loading the content packet. Thus, the final user transmits for example his/her public encryption key, whereby the content packet is encrypted. Thus, the encryption can only be decrypted by the final user with his/her own secret encryption key.

If the content packet is subject to a charge, or contains one or more content components subject to a charge, information on this is preferably included in the content packet data structure 24 or in the data structure describing the content component subject to the charge. Thus, information on loading of the content packet is set by the content packet loading server 18a, 18b e.g. in the user's debiting database or the like. On the basis of this debiting database, it is possible to transmit information related to debiting to such a content provider who has designed content components, subject to a charge, which the user has downloaded in his/her wireless communication device. In an advantageous embodiment of the invention, this debiting data also contains information about the method of payment, wherein if a payment method with credit facility is used, the information is also transmitted to the user's credit company.

The invention can also be utilized in the debiting of such content components subject to a charge, of which the payment is determined according to times of use. Thus, information is transmitted from the wireless communication device 5a, 5b, 5c always when such a content component subject to a charge is activated. This can be detected for example on the basis of decryption. The debiting data are transmitted to the content provider. Thus, the content provider is kept up to date on how many times the content packet has been decrypted, and debiting can thus be performed on the basis of this data. The content packet can also be provided with the information that the encryption can only be decrypted in a situation in which the wireless communication device is registered in a mobile communication network 2. Thus, it can be better secured that information about the decryption can be transmitted from the wireless communication device to the content provider 15a-15d.

The wireless communication devices 5a, 5b, 5c are equipped with content loading means, such as a content packet loading and installation application which can be run in connection with the control unit 34 of the wireless communication device. By means of the content loading means, the user can load and install content packets in the memory means of the wireless communication device 5a, 5b, 5c. Furthermore, these content loading means comprise means for decryption, if necessary. The user can start this application in a way known as such, by selecting, for example from (shortcut) icons referring to applications on a display device, an icon intended for this purpose, from the menu functions of the wireless communication device, or in another way known as such. By means of the content packet loading and installation application, the user can preferably search for the content packet on the basis of key words, classification, etc., download content packets in the wireless communication device 5a, 5b, 5c, as well as possibly also pay for the content packet by means of a data network (block 604).

The content components of the content packet which contain visual information do not necessarily need to be visible in the basic mode of the wireless communication device, but such content components can be presented e.g. by means of an application designed for this purpose.

The content provision system of the invention can also be provided with a testing environment for the user, such as a simulator application, by means of which the user can, before making a decision on acquiring the content packet, test the properties of the content packet in situations corresponding to reality. Such a simulator can be started e.g. by means of a browser in the content packet loading server 18a, 18b, wherein the user can get acquainted with the content packet with his/her wireless communication device 5a, 5b, 5c or with a computer 31 possibly used for loading.

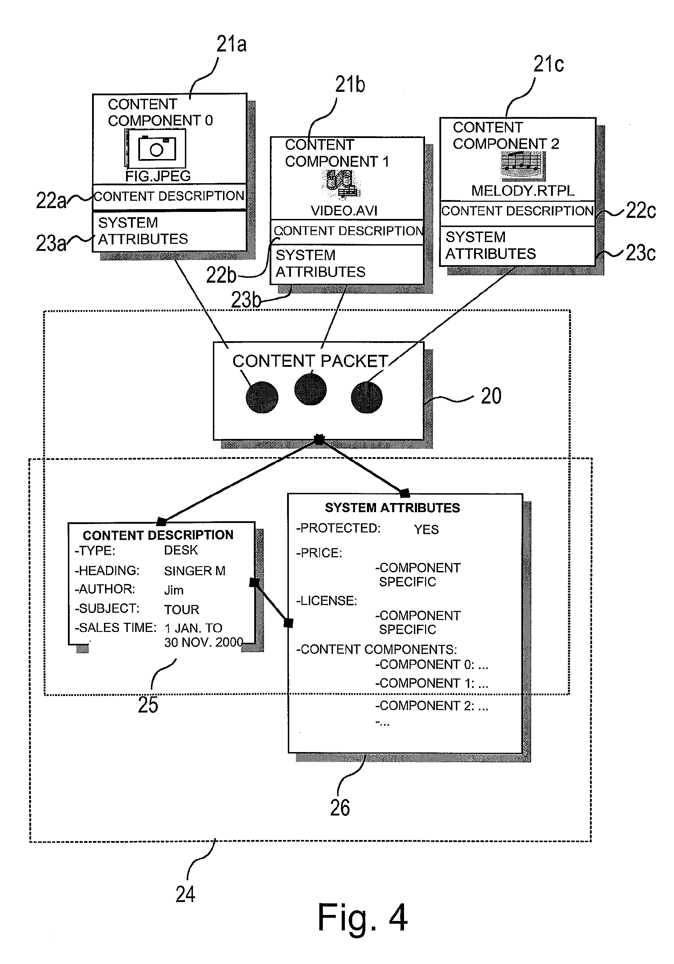

At the stage when the user of the wireless communication device 5a-5c has, in a database 19a, 19b of the content packet loading server 18a, 18b, found a content packet which he/she wants to download, the following steps are preferably taken in the method according to an advantageous embodiment of the invention. The user selects the content packet to be downloaded, wherein information about the selection is transmitted to the content packet loading server 18a, 18b. Furthermore, information on the properties of the wireless communication device 5a-5c, such as type data, is preferably transferred. Let us assume that the content packet is the content packet 20 shown in Fig. 4. Thus, the content packet loading server 18a, 18b starts to examine the information contained in the data structure 24. This data structure preferably comprises at least a content description data record 25 and a system attributes data record 26. On the basis of the type data in the content description data record 26, the loading server can deduce that it is a content packet. This content packet is also equipped with a title which is stored as a heading in the content description data record 26 ("Singer M"). Furthermore, also other information related to the content packet, such as data on the provider and compiler of the data packet, may have been stored in the content description data record. Furthermore, the data structure 24 comprises system specific information which makes it possible to process the content packets dynamically, such as to compile the device specific content components of the content packet in connection with the loading. The data structure may also comprise type data which tells whether the data structure is packed or unpacked. In addition, the data structure 24 preferably contains information about the number of components included in the content packet, information about the type of each content component, links, and the like. The data structure may also contain control data whereby the content components 21a-21f of the data structure are adapted to comply with the properties of the wireless communication device, or the versions of the different content components 21a-21f which best correspond to the properties of the wireless communication device 5a, 5b, 5c are selected. Furthermore, this content description data record 26 may contain information about the sales/distribution time of the content packet. Thus, the sales and/or distribution of the content packet can be limited in time, e.g. for the duration of a certain event, such as a fair, a tour, a sports tournament, *etc.*

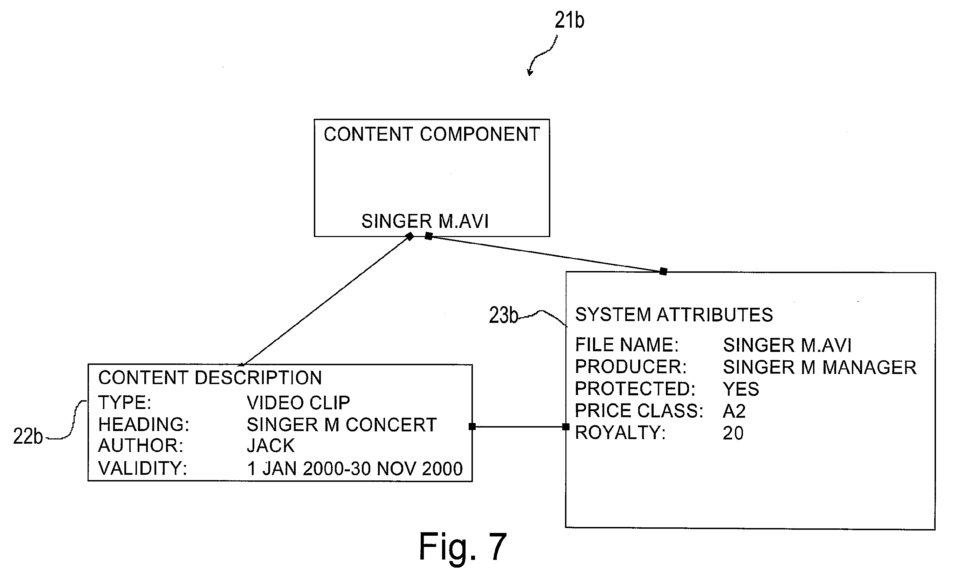

In the data structure 24, the system attributes data record 26 contains information on e.g. the pricing of the content packet as well as references to the content components 21 a, 21 b, 21 c belonging to the content packet 20. The content components 21a, 21b, 21c are supplemented with the data structure of the content component, which preferably contains a description data record 22a, 22b, 22c presenting content-specific information, as well as a system attributes data record 23a, 23b, 23c presenting information related to the system, such as information on copy protection. As an example, the structure of a content component 21 d is shown in Fig. 7. Next, the content packet loading server 18a, 18b compiles the content components as well as the data structures 24, 44 to be transmitted to the wireless communication device. This can be performed for example in such a way that the loading server transmits the data structure 24 as well as the content components 21a, 21 b, 21 c and their data structures 44 to a transmission buffer provided in the memory means, to a personal archive reserved for the user, to an e-mail box, or the like. Also a licence agreement which is possibly required is copied in the respective location. Of these data, preferably one or more data transmission packets are compiled, which are suitable for transmission in a communication network. The format of this data transmission packet depends on the structure of the communication system used at the time and is prior art known by anyone skilled in the field, wherein its discussion in more detail will not be necessary in this context. There is not always a need to copy the content packet to said transmission buffer or the like, but only the address to the storage location of the content packet. Thus, downloading can be performed from the location indicated in this address data.

For example, at the stage of compiling the packet, it is checked in the content component system attributes data record 23a, 23b, 23c, whether there is a need to copy protect and/or encrypt any of the content components of the content packet to be transmitted. If the content packet contains a content component that should be protected and/or encrypted, the required operations are taken to copy protect and/or encrypt such a content component before the content packet in question is transmitted to the communication system. Further, to perform the encryption, the content packet loading server 18a, 18b can transmit an encryption key inquiry message to the wireless communication device 5a-5c, which responds by transmitting its own public encryption key to be used in the encryption of the content component.

Furthermore, from the content component system attributes data records 26, 23a, 23b, 23c, the content packet loading server 18a, 18b preferably examines, if the content packet or any of its content components is subject to a charge. If the content packet or any one or several of the content components are subject to a charge, there are several alternative ways to make the payment. One alternative is that, at this stage, a control message is transmitted to the user's wireless communication device to start a payment application in the wireless communication device 5a-5c, or a message is transmitted in which the user is requested to start such a payment application in the wireless communication device 5a-5c. Furthermore, with this message, e.g. reference data or the like can be transmitted, whereby the user can specify the payment to relate to the loading of the content packet in question. After the payment has been made, information on this is transmitted to the content packet loading server 18a, 18b. After this, the transmission of the content packet to the user's wireless communication device 5a-5c can be started. It is obvious that the above-presented method for making a payment is only one non-restricting example.

Yet, the content packet loading server 18a, 18b investigates, on the basis of the property data of the wireless terminal, if any of the content components is hardware specific, wherein such a version of this content component is selected which corresponds to the properties of the wireless communication device in which the content packet is loaded. Such a content component can be for example a backdrop, wherein the properties of the display of the wireless communication device may affect on what kind of a content component should be loaded. Also the audio properties, memory capacity and data transmission rate of the wireless communication device, the user preferences, the conditions of the mobile subscriber agreement made by the user, and other similar factors can affect the version of the content component to be loaded.

The content packet and the content components included in it are transmitted in the communication system by applying methods known as such (block 605). In the data transmission, it is possible to use e.g. Internet addresses or the like. In the mobile communication network 2, the data transmission packets are preferably transmitted by means of a packet network 7 to a base station subsystem 10, whose base station communicates with the wireless communication device 5a-5c to transmit the data transmission packets to the wireless communication device. It is obvious that in the transmission of the data transmission packets, it is possible to perform framing of the data transmission packets and protocol conversions in a way known as such.

The wireless communication device 5a-5c receives the data transmission packets, and the information contained in them is transferred to a content packet loading and installation application for processing. In this application, the information contained in the data structure 20 is examined e.g. to find out which content components are included in the content packet. If necessary, possibly encrypted data are decrypted to a plain format. After this, the content components are preferably stored in separate files in the memory means of the wireless terminal.

After the content packet has been loaded in the wireless communication device, the application starts to examine the data structure of the content packet. However, if it is a packed content packet, it is first decompressed at least to such an extent that the data structure can be restored to a format corresponding to the original. After this, the data structure is utilized to find out the type data, possibly compression data, copy protection data, etc. relating to the components included in the content packet. On the basis of these data, the application stores the components of the content packet in the memory means of the wireless communication device for later use. The application forms, for example, a subdirectory in the directory structure of the memory means of the wireless communication device. In this subdirectory, the content components of the content packet are preferably stored as separate files. The user can also be asked if the loaded content packet is to be activated. If the user wishes to activate the content packet (block 606), the steps of activating the content packet are taken. Thus, the functional settings of the wireless communication device are changed in those respects as the content packet includes different content components. The content packet can contain for example a background image, wherein the backdrop of the wireless communication device is changed to correspond to the backdrop component of the activated content packet. The content packet can also contain several audio files for different situations, wherein also these are activated, if the user so wishes. The content packet can also contain links to different addresses in the communication system, wherein also these links are stored in the memory means. For each link, it is also possible to form an icon on the display, or the like, wherein the user can, by selecting this icon, set up a connection directly to the address defined in this link. By this arrangement, the wireless communication device can be used to set up a connection to defined links without a need to first set up a connection from the wireless communication device to a terminal server. In the method of the invention, the user can design content packets and supplement different content packets with preferred information; consequently, the user can gather a set of addresses in one content packet, which facilitates the searching of these addresses, when needed. The user can, for example, define a content packet for his/her job tasks, wherein the links can contain addresses to the data system of the user's employer, to the addresses needed by the user in his/her job, and the like.

The content components preferably comprise a data structure describing the content component as well as the actual content component, such as a backdrop, an application, a document, or the like. Thus, at the loading or installing stage, the data structure part can be deleted and the actual content component can be taken into use.

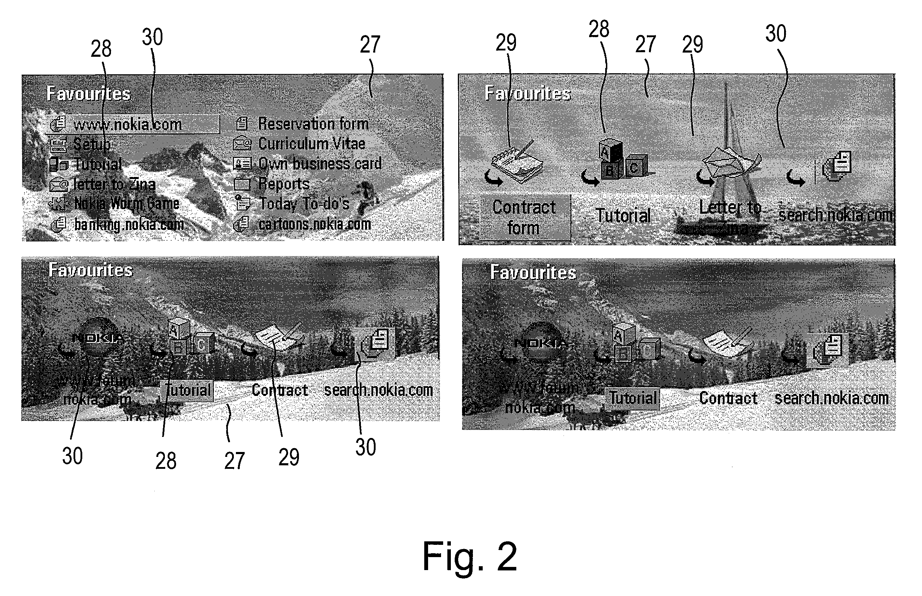

Figure 2 shows some examples of content packets 20 which have been used to change e.g. the backdrop 27 of the wireless communication device, to form shortcut images 28, references 29 to files, as well as links 30 to various Internet pages.

For designing content packets, the user of the wireless communication device 5a, 5b, 5c can be provided with an application which is made for this puspose and which preferably implements the same functions as the applications intended for content providers and mentioned above in this description, for providing contents. The user can thus define his/her own private content packets of files and content packets stored in the memory means of the wireless communication device and, if necessary, also files, content packets and the like stored elsewhere in the communication network. Such a content packet provision application can be arranged in the Internet data network 3, wherein the user can make his/her own content packets by means of such applications available through the Internet data network 3. In this intention, it is possible to use e.g. a wireless communication device 5a, 5b, 5c or a data processor 31 (Fig. 1) equipped with the necessary means (a modem, radio card or the like) as well as applications (e.g. a web browser program). The user can also store the content packets and content components designed by him/her in his/her own personal electric archive or the like, from where the user can load content packets to his/her wireless terminal. The user can also make content packets with his/her wireless communication device 5a, 5b, 5c or data processor 31 (Fig. 1) by means of applications, files, content components and content packets possibly stored in the device 5a, 5b, 5c, 31. Furthermore, the user can transmit the content packet stored in the device into his/her own archive which can be located e.g. in memory means in the server of the service provider.

In an advantageous embodiment of the invention, the user can transmit content packets and content components between the wireless communication device 5a, 5b, 5c and the data processor 31 also directly, for example by means of wireless local communication means.

Content packets can be designed for example to be related to work, leisure time, activities, and so on, wherein the user can activate the content packet preferred at the time. Furthermore, the provider of the content packet loading server 18a, 18b can form new content packets of content components and/or content packets stored in the database 19a, 19b. In practice, this refers primarily to the formation of a new data structure 24, if the content components are not changed. In case the new content packet contains a content component processed from an existing content component, the processed content component is stored as a separate content component, if the aim is to keep the original content component also still available. On the other hand, two or more content packets, which are preferably of the same type, can be combined to a new content packet, either as such, or by editing one or more content components.

The content packet may contain a lot of various information, such as backdrops, documents, applications, calendar events, audio and video files, links, WWW pages, and so on. The content packet can also contain an installation application for installing the content packet in a wireless communication device. This is necessary in such situations in which such an application is not installed in the wireless communication device itself. In this case, the content packet can be loaded for example by means of a WAP browser application or a web browser application, after which the user starts the application provided with the content packet, to install the content packet in the wireless communication device 5a, 5b, 5c.

Upon loading of the content packet, the wireless communication device 5a, 5b, 5c can transmit information about the properties of the wireless communication device to the system, such as information about the audio properties, visual properties, e.g. the display resolution, information about whether the wireless communication device has a dichrome or multichrome display, the memory capacity, etc. Thus, the content packet loading server 18a, 18b can select, from the content packet database 19a, 19b, such a version of the content packet which has been adapted to correspond to the type of the wireless communication device in question. On the other hand, e.g. the content packet loading server 18a, 18b may contain stored information on the user's wireless communication device, wherein the wireless communication device transmits e.g. an international mobile equipment identity (IMEI) or an international mobile subscriber identity (IMSI) to the content packet loading server 18a, 18b, to identify the properties of the wireless communication device. The content packet loading server 18a, 18b can also contain model-specific property information about the wireless communication devices by different manufacturers, wherein upon performing the loading, to inform about the properties of the wireless communication device, it is normally sufficient that information about the manufacturer and model of the communication device is transmitted to the content packet loading server 18a, 18b. Thus, the user does not need to search the property data of the wireless communication device. This arrangement may also reduce the need for communication from the wireless communication device to the content packet loading server 18a, 18b. Another alternative is that, at the beginning of the communication, the user is asked for information about the properties of the wireless communication device. Further, in an advantageous embodiment of the method according to the invention, the user can study the different properties of the content packet to be loaded before making a decision on loading. In addition, the user can select the components of the desired content packet, wherein it is not always necessary to load the whole content packet for example in a situation, in which the user only wishes to have a new backdrop loaded or some links to different databases.

For example, a wireless communication device of the type of Nokia 9110 Communicator has a so-called user profile key, which the user can use to activate a desired user profile. In the arrangement of the invention, one content component that can be used is to download functions related to this user profile key, such as new user profiles as well as ringing tones, alarm tones, *etc*. to be used in the user profiles, in the wireless communication device. In some device types, it is also possible to use an operator logo mentioned above in this description, wherein a content component intended for transfer of settings of such an operator logo to the wireless communication device is only transmitted in a situation that the receiving wireless communication device supports such a function. In other cases, such a content component of a content packet is preferably left untransmitted.

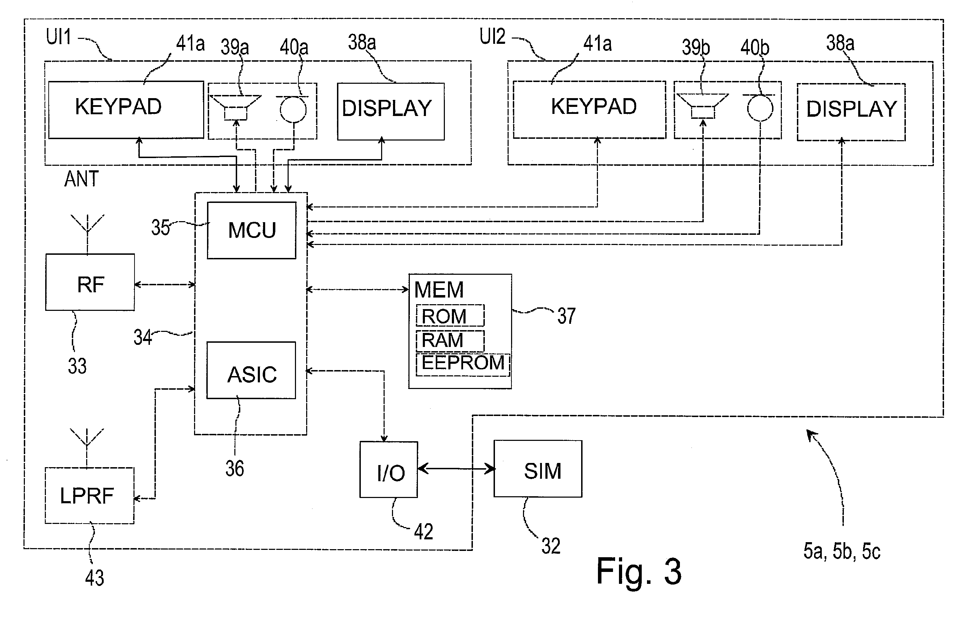

It is thus possible to copy protect the content packets implemented by the method of this invention, if necessary. This copy protection can be arranged to be for example user-specific or device-specific. In user-specific copy protection, it is advantageous to use the international mobile subscriber identity (IMSI) to implement the copy protection. In a corresponding manner, in device-specific copy protection, it is possible to utilize the international mobile equipment identity (IMEI) to prevent copying to other devices. In the GSM mobile communication system, for example, the wireless communication device 5a, 5b, 5c, comprises an identification card, a so-called SIM card 32 (Fig. 3), on which the user's international mobile subscriber identity is stored. Thus, the content packet installation program can examine the user identification contained on this SIM card 32 and compare it with the user identification defined in the content packet. If the data match, the installation program performs installation of the content packet in the wireless communication device. In a corresponding manner, when device-specific copy protection is used, the installation program compares the equipment identification stored in the wireless communication device with the equipment identification in the content packet, and if the data match, the installation program performs installation of the content packet. Copy protection can also be implemented, for example, by selecting a connection-specific random key in the system. Information about the selected random key is transmitted to the wireless communication device during the connection, and this key is used for encryption. Furthermore, if the content packet loading server 18a, 18b maintains a user register in which it is possible to define several wireless communication devices 5a, 5b, 5c and/or SIM cards 32 (telephone numbers) for the user, the user can be given a chance to copy content components and content packets from one of his/her communication device to another communication device. This property can be utilized e.g. for synchronizing communication devices for example with respect to links, such as the URL. The user's subscriber identity IMSI and equipment identity IMEI can also be used to secure that the loading of the application packet is really performed by the user in question.

The invention can also be applied in connection with a location-specific content. Thus, for example, the content providers of a certain city can transmit to the system such content packets which are primarily significant in that location. Thus, the wireless communication device or system comprises means for determining the location of the wireless communication device. When the user is moving in a certain city, it is thus possible to transmit, from the system, information on location-specific content packets that can be applied in that location. Thus, the user can decide whether or not to load the content packet in his/her wireless communication device. Such a system can be applied for example in connection with map services, restaurant services, and so on. On the other hand, the system is also suitable for implementing different language versions, wherein a content packet with the same content can be implemented in different languages in different countries.

Content packets according to the invention can be updated when the location of the user is changed. For example, in a content packet, the user has defined a shortcut for such an Internet terminal server address (access point), through which the user's wireless communication device can be coupled to the Internet data network 3. This Internet terminal server address definition may include e.g. data about the connection name, a telephone number, a password inquiry, a user identification, and password, if the password inquiry is used, proxy server data for protocols, such as http, https, ftp (proxy port number, proxy server), data call type data (e.g. normal/high-speed), remote modem type (analogue/digital), maximum transfer rate (e.g. auto/9600/48800), modem initialization character string, recall settings, PPP compressing data, etc. In some situations, e.g. when travelling abroad, it may be less expensive for the user, even free of charge, to couple to the Internet data network 3 via a terminal server of a local service provider. Thus, in the system of the invention, the version of the content packet in which this content component referring to the terminal server contains data about the local terminal server and, if necessary, other revised data in the Internet terminal server address definition, are transmitted to the wireless communication terminal 5a, 5b, 5c, after which the shortcut refers to this local terminal server.

The location of the wireless communication device at each time can be determined e.g. by various registers of the mobile communication network, such as the home location register (HLR) and/or the visitor location register (VLR), or possibly by means of the base stations. Thus, the operator of the mobile communication network can, for example, transmit location data to the content packet provider which can, on the basis of this location data, transmit content packets and/or information about content packets provided by a service provider to the wireless communication device. In the implementation of such a service, preferably also user settings are taken into account, because all users do not necessarily always want to receive such content packets or information about them. Thus, before transmitting information, it is checked whether the user has elected such automatic transmission to his/her wireless communication device. Furthermore, the user may have defined, what type of contents he/she is interested in, in which case the content packet provider can first find out if there are content packets which include content components interesting to the user. In a situation in which content packets are not transmitted automatically but only information about them, the user him/herself can download interesting content packets with the wireless communication device.

Users of wireless communication devices can search for various content packets by using e.g. web and/or WAP browser programs and set up a connection to loading servers 18a, 18b to search and browse content packets stored in databases 19a, 19b. The browsing can be based on key words, type data, or the like, which data is preferably stored at least according to the content component. The content components thus have a set of attributes, e.g. information formed by META definitions, about the content components. These content component attributes as well as the content packet attributes are set and stored at the stage of production of the content components and content packets, wherein the attributes can be utilized for example in the formation of search indices. Furthermore, it is possible to use audio control methods and other methods known as such, to browse the content packets. In addition, in the browsing, it is possible to utilize user profile data on the user, wherein the user can define the objects of his/her interests, and the browsing is primarily focused on browsing packets related to the defined interests.

The content packets are not necessarily stored in one file in the database 19a, 19b, but they can be scattered in several different files. Thus, the data structure related to the content packet is used to compile the content packet at the stage when the user has subscribed loading of the content packet. If the content packet or a part of it is subject to a charge, it is possible to first make sure that the user has made payment for example by means of using the wireless communication device, or to start a payment application in the wireless communication device. After this, the components of the content packet are compiled by the loading server 18a, 18b, and the content packet or a link to the content packet/components is transmitted to the user's wireless communication device. Particularly in the loading of content packets subject to a charge, a licence agreement or the like is also transmitted to the wireless communication device. Furthermore, the server 18a, 18b is preferably equipped with a user-specific subdirectory in which the content packet or a link to the content packet and a possible licence agreement is first stored and only after that the content packet is loaded in the wireless communication device. At the stage of compiling the content packet, it is also possible to take into account user-specific data, such as language settings, data on properties of the wireless communication device, country data, data on content packets previously loaded by the user, etc.

As the server 18a, 18b has user-specific subdirectories, e.g. the advantage is achieved that this subdirectory is a kind of confirmation of the loaded content packets to the user. The arrangement also makes it possible that the user can load the same content packets in several wireless communication devices; the arrangement further facilitates dynamic copy protection, particularly in situations in which the content packet is loaded in more than one communication device; and the arrangement also makes partial downloading of a content packet possible.

Upon displaying content packets downloaded and installed in the wireless communication device, several principles can be applied. A backdrop is displayed on the display of the wireless communication device. Possible links can also be displayed as shortcuts on the display, ringing tones and other sound effects can be produced in corresponding situations, for example upon an incoming call, and so on. Shortcuts can be added in content packet applications, messages, WWW pages, WAP bookmarks, documents, notes, etc.

The invention can also be applied in situations in which information is transmitted to the user when new program versions, new products, new content packets, etc. are launched on the market. Thus, information in the database 19a, 19b can be used to find out information on content packets loaded in the user's wireless communication device, wherein this information can be used by the system to transmit to the user's wireless communication device information about new program versions and possibly even also a new content packet or a new version of a component related to it (block 607 in the chart of Fig. 6). If necessary, the user can be asked if he/she wishes to load the new program version or content packet component. Furthermore, by the method according to the invention, the content packets can be loaded even in situations in which the user takes into use another wireless communication device which does not have all the content packets of the first wireless communication device loaded. Thus, the system can ask the user if he/she wishes to load such content packets which are installed in the first wireless communication device.

The system according to the invention makes it possible that when the user activates a component of a content packet, information on this is transmitted to the system. After this, the system can transmit information according to the activated content packet to the user. For example, the user has activated a content packet related to a specific field of activity, after which it can be found out if there is information related to this activity available in the system, for example information on events, fairs, competitions, or the like, in the field. After this, such information can be transmitted to the user, if it has not been already transmitted earlier. A corresponding mechanism can also be applied in the compilation of debiting data. For example, when the user downloads a backdrop which is subject to a charge, or starts an application to which a licence fee is related, information on this can be transmitted to the system to enter the respective change in the user's debiting data.

The present invention can also be applied in a variety of situations, of which only a few are mentioned above. The invention provides a handy distribution channel from a content provider to the final user. Furthermore, the invention can be used to rationalize the debiting operations of contents subject to a charge, to prevent pirate copying, and thereby to secure that the content provider duly receives a payment for such content packets which have been taken to use in wireless communication devices. Also the user can design his/her own content packets and transmit them to the system for distribution to other users, which has been very difficult in solutions of prior art. The invention also makes it possible that the user's wireless communication device can, as such, constitute a kind of terminal server (portal) for setting up a data transmission connection to links, web pages, etc. important to the user. Thus, for example to use the Internet data network, the user does not need to set up a data transmission connection to a conventional web terminal server or mobile server. Moreover, by this method, users can easily set up individual terminal servers e.g. for the reason that the data of the components included in the content packets can also be edited. The fact that the user can make his/her own terminal server provides the advantage to the user that e.g. the Internet operator cannot find out what kind of information the user browses in the Internet data network.

There can simultaneously be several content packets and their content components stored in the wireless communication device. The user can thus activate one of these stored content packets, wherein the content packet does not need to be loaded from the loading server 18a, 18b. The content components stored in the wireless communication device can also be available for other applications used in the wireless communication device. Since information about the components included in the content packet remains in the wireless communication device, loaded content packets can also be deleted from the wireless communication device.

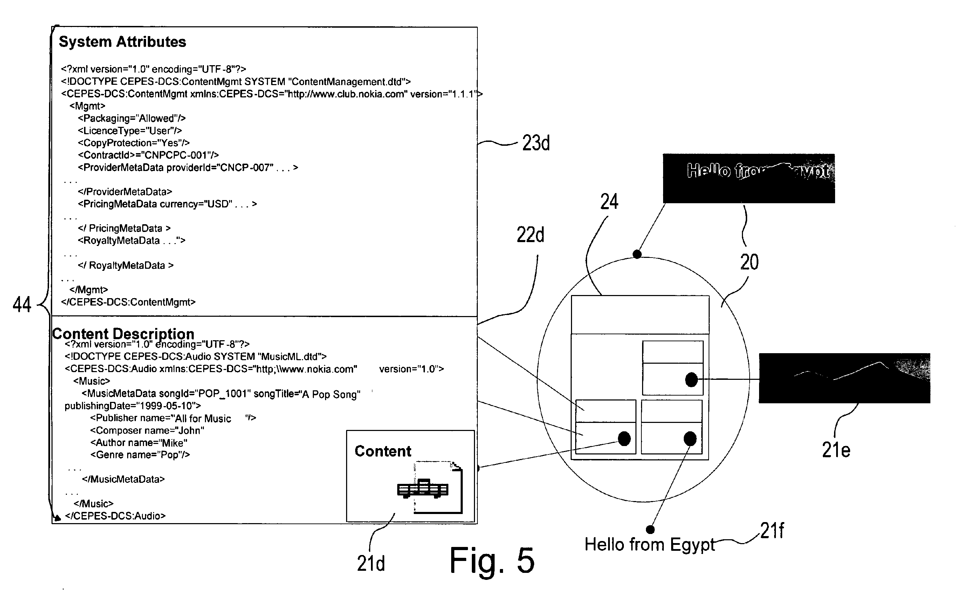

Figure 5 shows, in a reduced manner, another example of a content packet 20, which in this case represents an electric postcard. The figure shows the structure of a content component. It comprises a data structure 44, which preferably consists of at least a content description data record 22d and a system attributes data record 23d, whereby the content packet of the invention can be presented. First of all, the data structure 44 comprises description data on the contents of the content packet which can be utilized e.g. in content classification, the user interface and the implementation of a search service. In this example, the content components are a melody 21d, a landscape image 21e and a greeting text 21f. This content packet may have been compiled by the user of a wireless communication device, e.g. of content components stored in a content packet loading server 18a, 18b at a travel resort, to which the user has added his/her greetings as one content component. After compiling such a content packet, the user of this wireless communication device may transmit it e.g. to the wireless communication devices of some persons known to him/her, which then indicate an incoming content packet. After this, the user of the wireless communication device that received such a content packet can activate the content packet which in this example preferably means that the image 21 e and the text 21f belonging to the content packet are displayed on the display and the melody 21d is reproduced by means of a speaker/earpiece 39a, 39b (Fig. 3).

In the practical implementation of the data structure 24, 44, it is possible to apply several methods known as such. For example, the data structure 24, 44 can be a text file in which various control structures are used to describe the properties of the content components of the content packet. For example, the data structure 24, 44 can be implemented by means of so-called META definitions. The data structure 24, 44 makes it possible to reuse the content components, wherein the content components can be combined with different content packets, the content components can be copied, etc. In such situations, the attributes of the content components can be copied to a new content packet, or the attributes can be edited partly or wholly, if necessary. An application for producing content packets comprises a function whereby these attribute data can be edited and stored in the data structure 24, 44. In a corresponding manner, at installation and loading stages, an interpreter application (Meta data interpreter) or the like is used to interpret these attribute data.

Figure 3 shows the structure of a wireless communication device 5a, 5b, 5c complying with a preferred embodiment of the invention, in a reduced block chart. The wireless communication device preferably comprises at least a radio part 33, a control unit 34, memory means 37, and a first user interface UI1. Furthermore, the wireless communication device of Fig. 3 comprises a second user interface UI1 and wireless local communication means 38. The radio part 33 comprises means for communicating with the mobile communication device, known as such. The control unit 34 preferably comprises a processor 35 (micro controlling unit, MCU) and an application specific integrated circuit ASIC 36. The memory means 37 comprise a memory for storing e.g. applications, content packets and the operating system, as well as for storing data required during the operation of the wireless communication device. In practical applications, such memory means used can be e.g. a read only memory (ROM), a random access memory (RAM) and/or an electrically erasable programmable read only memory (EEPROM). Furthermore, the memory means 37 can comprise a mass storage, such as a fixed disc, a FLASH card, an escort memory, etc. The user interfaces UI1, UI2 preferably have a display 38a, 38b, audio means, such as a speaker/earpiece 39a, 39b, and a microphone 40a, 40b, as well as a keypad 41a, 41b. These different user interfaces UI1, UI2 may have different properties. For example, the first user interface UI1 may be primarily intended for telephone functions, wherein its keypad 41a primarily consists of numeric keys as well as handset keys (not shown). The resolution of the display 38a of this user interface UI1 is normally lower than the resolution of the display 38b of the second user interface UI1 which is particularly used for data processing functions. The keypad 41b of the second user interface UI2 preferably comprises a QWERTY type keyboard. For loading and installing content packets according to the invention, this second user interface UI2 is preferably used, but it is obvious that the invention is not limited solely to use situations of this type. Furthermore, the wireless communication device of Fig. 3 has connection means 42 (I/O) for connecting a SIM card 32, wherein the control unit 34 of the wireless communication device can communicate with the SIM card 32 e.g. to read data stored on the SIM card and to store data on the SIM card. By means of the local communication means 43, the wireless communication device 5a, 5b, 5c can locally communicate with a device provided with corresponding local communication means, such as a Bluetooth transceiver and/or a WLAN transceiver.

Most of the functions of the method according to the invention can be implemented by software. In the wireless terminal, the stages of loading and installing content packets can be primarily implemented as a program code in the processor. In a corresponding manner, the stages of producing content packets can be primarily implemented in the content packet control server 16a, 16b, and the distribution stages in the content packet loading server 18a, 18b.

In the method of the invention, the applications to be used can also be stored in a storage means which is not to be installed in a fixed manner, such as a diskette, an exchangeable fixed disc, a CD-ROM, a digital versatile disc (DVD), a FLASH card, an auxiliary memory card, or the like, wherein the application or applications can be supplied to content providers and/or to users of wireless communication devices by means of such a storage means, from which the application/applications can be loaded into the memory means of the device. In some cases, applications can be run without transferring them to the storage means of the device. In this case, the storage means is placed in an internal or external peripheral device arranged in connection with the device, wherein the device runs the applications directly from the storage means. The installation and use of the applications are prior art known by anyone skilled in the field, wherein their description in more detail will not be necessary in this context. Also, content packets 20 can be stored in storage means which the user can acquire e.g. from kiosks, software dealers or the like.

In a preferred embodiment of the invention, the storage means used can be a local content packet loading server which is advantageously equipped with local communication means, such as short-range radio communication means (Bluetooth, WLAN) or infrared communication means (IrDA). Such local content packet loading servers can be arranged e.g. in public facilities, such as bus stations, railway stations, airports, post offices, banks, kiosks, etc. Thus, the user of the wireless communication device 5a, 5b, 5c can load one or more content packets 20 by setting up a data transmission connection to a local content packet loading server by means of corresponding local communication means 43 of the wireless communication device. The payment can be made e.g. by the users cash card, by cash, and even with the wireless communication device 5a, 5b, 5c e.g. by means of an Internet bank application, or if a cash card application is installed in the wireless communication device 5a, 5b, 5c, the payment can also be made by using this application.

It is obvious that the present invention is not limited solely to the above-presented embodiments, but it can be modified within the scope of the appended claims.

## Claims

1. A method for preventing an unauthorized use of contents for a wireless communication device (5a, 5b, 5c), which wireless communications device is provided with identification information, the method comprising:
forming at least one content component (21a - 21f) from the content;
**characterized by**
supplementing said at least one content component (21a - 21f) with at least one data structure (44);
defining information associated with the content component (21a - 21f) into the data structure (44);
forming at least one content packet (20);
supplementing said at least one content packet (20) with said at least one content component (21a - 21f) with which said at least one data structure (44) is supplemented; and
defining authentication information on the content packet (20).

2. The method according to claim 1 further comprising storing said content packet (20).

3. The method according to claim 1 comprising supplementing the content packet (20) with at least one data structure (44) in which information associated with a content packet (20) and information associated with content component (21a - 21f) in the content packet (20) is defined.

4. The method according to claim 1 comprising storing the content components (21a - 21f) as separate files.

5. The method according to claim 1 comprising including at least two separate content components (21a - 21f) into at least one content packet (20).

6. The method according to claim 5 comprising defining common authentication information for all said separate content components (21a - 21f).

7. The method according to claim 5 comprising defining separate authentication information for each said separate content component (21 a - 21f).

8. The method according to claim 1 comprising defining identification information of more than one wireless communication device (5a, 5b, 5c) as said authentication information.

9. The method according to claim 1 comprising using any of the following identification information as said authentication information:
- an international mobile equipment identity;
- an international mobile subscriber identity.

10. A method for loading a content packet (20), which is provided with authentication information, to a wireless communication device (5a, 5b, 5c), which is provided with identification information, the method comprising:
selecting a content packet (20) for loading;
comparing the authentication information of the content packet (20) with the identification information of the wireless communication device (5a, 5b, 5c), and
loading the content packet (20) to the wireless communication device (5a, 5b, 5c), if the comparison indicates that the authentication information of the content packet (20) matches with the identification information of the wireless communication device (5a, 5b, 5c).

11. The method according to claim 10, the content packet (20) comprising separate files, wherein the method comprises combining the separate files of the content packet (20) at the loading stage, for loading into the wireless communication device (5a, 5b, 5c).

12. The method according to claim 10, at least one content packet (20) comprising at least two separate content components (21a - 21f) and common authentication information for all said separate content components (21a - 21f), wherein the loading the content packet (20) comprises loading all the separate content components (21a - 21f) of the content packet (20) if the comparison indicates that the authentication information of the content packet (20) matches with the identification information of the wireless communication device (5a, 5b, 5c).

13. The method according to claim 10, at least one content packet (20) comprising at least two separate content components (21a - 21f) and separate authentication information for each said separate content component (21a - 21f), wherein
said comparing the authentication information comprises comparing authentication information of each content component (21a - 21f) of the content packet (20) with the identification information of the wireless communication device (5a, 5b, 5c); and
said loading the content packet (20) comprises loading only such content components (21a - 21f) of the content packet (20) for which the comparison indicates that the authentication information of the content component (21a - 21f) matches with the identification information of the wireless communication device (5a, 5b, 5c).

14. A method for preventing an unauthorized use of contents for a wireless communication device (5a, 5b, 5c), which wireless communications device is provided with identification information, the method comprising:
forming at least one content component (21a - 21f) from the content;
supplementing said at least one content component (21a - 21f) with at least one data structure (44);
defining information associated with the content component (21a - 21f) into the data structure (44);
forming at least one content packet (20);
supplementing said at least one content packet (20) with said at least one content component (21a - 21f) with which said at least one data structure (44) is supplemented; and
defining authentication information on the content packet (20).
selecting a content packet (20) for loading;
comparing the authentication information of the content packet (20) with the identification information of the wireless communication device (5a, 5b, 5c), and
loading the content packet (20) to the wireless communication device (5a, 5b, 5c), if the comparison indicates that the authentication information of the content packet (20) matches with the identification information of the wireless communication device (5a, 5b, 5c).

15. A content packet server (18a, 18b) comprising:
means for forming at least one content component (21a - 21f) of contents for a wireless communication device (5a, 5b, 5c);
**characterized by**
means for supplementing said at least one content component (21a - 21f) with at least one data structure (44),
means for defining information associated with the content component (21a - 21f) into the data structure (44);
means for forming at least one content packet (20);
means for supplementing said content packet (20) with said at least one content component (21a - 21f) with which said at least one data structure (44) is supplemented;
means for defining authentication information on the content packet (20).

16. The content packet server (18a, 18b) according to claim 15 comprising:
means for storing said content packet (20); and
means for loading said content packet (20) into the wireless communication device (5a, 5b, 5c).

17. The content packet server (18a, 18b) according to claim 16, in which the content components (21a - 21f) are stored as separate files, wherein the content packet server (18a, 18b) comprises means for combining content components (21a - 21f) belonging to a content packet (20) with the content packet (20), for loading into the wireless communication device (5a, 5b, 5c).

18. The content packet server (18a, 18b) according to claim 15 comprising means for encrypting the content component (21a - 21f).

19. The content provision system according to claim 15 comprising means for searching content packets (20).

20. A content packet server (18a, 18b), **characterized by**
means for receiving a content packet (20) provided with authentication information and comprising at least one content component (21a - 21f) of contents for a wireless communication device (5a, 5b, 5c), said at least one content component (21a - 21f) supplemented with at least one data structure (44), and said data structure (44) comprising information associated with the content component (21a - 21f);
means for defining authentication information on the content packet (20); and
means for loading said content packet (20) into the wireless communication device (5a, 5b, 5c).

21. A content packet server (18a, 18b) according to claim 20 comprising:
means for selecting a content packet (20) for loading;
means for receiving identification information of the wireless communication device (5a, 5b, 5c);
means for comparing the authentication information of the content packet (20) with the identification information of the wireless communication device (5a, 5b, 5c), and
means for utilizing the content packet (20) by the wireless communication device (5a, 5b, 5c), if the comparison indicates that the authentication information of the content packet (20) matches with the identification information of the wireless communication device (5a, 5b, 5c).

22. A device (5a, 5b, 5c), **characterized by**
means for receiving a content packet (20) provided with authentication information and comprising at least one content component (21a - 21f) of contents, said at least one content component (21a - 21f) supplemented with at least one data structure (44), and said data structure (44) comprising information associated with the content component (21a - 21f);
means for comparing the authentication information of the content packet (20) with the identification information of the wireless communication device (5a, 5b, 5c), and
means for utilizing the content packet (20) by the wireless communication device (5a, 5b, 5c), if the comparison indicates that the authentication information of the content packet (20) matches with the identification information of the wireless communication device (5a, 5b, 5c).

23. A device according to claim 22, **characterized in that** it is a wireless communication device (5a, 5b, 5c).
